# EUROPEAN PATENT SPECIFICATION

(11) **EP 4 163 540 B1**
(45) Date of publication and mention of the grant of the patent: **19.08.2026**
(21) Application number: 21821991.3
(22) Date of filing: 03.06.2021
(51) Int. Cl.: F21V 9/32, F21S 2/00, F21V 7/26, F21V 29/502, F21V 29/70, F21Y 115/10, F21Y 115/30

(54) **FLUORESCENT PLATE, WAVELENGTH CONVERSION MEMBER, AND LIGHT SOURCE DEVICE**
FLUORESZENZPLATTE, WELLENLÄNGENUMWANDLUNGSELEMENT UND LICHTQUELLENVORRICHTUNG
PLAQUE FLUORESCENTE, ÉLÉMENT DE CONVERSION DE LONGUEUR D'ONDE, ET DISPOSITIF DE SOURCE DE LUMIÈRE

(30) Priority: 08.06.2020 JP 2020099393
(43) Date of publication of application: 12.04.2023
(73) Proprietor: Niterra Co., Ltd., Nagoya-shi, Aichi 461-0005 (JP)
(72) Inventor: YAMAUCHI Hiroki, Nagoya-shi, Aichi 467-8525 (JP); TAKAKU Shohei, Nagoya-shi, Aichi 467-8525 (JP); BAN Shinji, Nagoya-shi, Aichi 467-8525 (JP); TAKEUCHI Hiroki, Nagoya-shi, Aichi 467-8525 (JP)
(74) Representative: J A Kemp LLP
(86) International application number: PCT/JP2021/021145
(87) International publication number: WO 2021/251252

(56) References cited:
- EP-A1- 3 428 697
- JP-A- 2003 040 688
- JP-A- 2003 040 688
- JP-A- 2019 066 880
- JP-A- 2019 211 670
- JP-A- 2019 211 670
- US-A1- 2017 139 224
- US-A1- 2019 195 467
- US-B2- 10 606 158

## Description

### [Technical Field]

The present invention relates to a fluorescent plate, to a wavelength conversion member, and to a light source device.

### [Background Art]

Heretofore, there has been known a fluorescent plate (or screen) which emits fluorescence when irradiated with light. In recent years, a number of known fluorescent plates have been highly-functionalized. Specifically, some fluorescent plates include a fluorescent phase which emits light having a wavelength different from that of the irradiation light, and a light-transmitting phase which allows passage of light. For example, Japanese Patent Application Laid-Open (kokai) No. 2014-132084 discloses a technique of integrally incorporating a phosphor material (YAG:Ce) into a light-transmitting phase formed of Al₂O₃. Japanese Patent Application Laid-Open (kokai) No. 2019-164302 discloses a technique of causing light scattering in voids surrounded by a fluorescent phase and a light-transmitting phase on the basis of the difference in refractive index between the two phases.

US 2017/0139224 A1 discloses a phosphor ceramic, an encapsulated optical semiconductor element, a circuit board, an optical semiconductor device and a light-emitting device.

### [Summary of the Invention]

### [Problem to be Solved by the Invention]

However, in order to enhance both light extraction efficiency and durability against thermal shock (hereinafter referred to as "thermal shock resistance") of the fluorescent plate, there is still room for improvement in the aforementioned background technique. More specifically, according to the technique disclosed in Japanese Patent Application Laid-Open (kokai) No. 2014-132084, the thermal shock resistance of the fluorescent plate is enhanced by forming a high-density inner structure. However, diffusion of light occurs at the grain boundary between crystal grains forming the fluorescent phase and the light-transmitting phase, thereby causing broadening of light emission. Thus, difficulty is encountered in condensing light toward a single direction and enhancing emission intensity in a target direction. Also, according to the technique disclosed in Japanese Patent Application Laid-Open (kokai) No. 2019-164302, voids where light is scattered have an angular (i.e., non-round) shape, and stress attributed to thermal shock is concentrated to corners of the voids. In such a case, breakage readily occurs from the voids, resulting in a drop in thermal shock resistance.

Under such circumstances, an object of the present invention is to provide a technique for enhancing both light extraction efficiency and thermal shock resistance of a fluorescent plate.

### [Means for Solving the Problem]

The present invention has been accomplished so as to solve at least part of the above-described problems and can be realized in the following aspects.
(1) In one aspect of the present invention, a fluorescent plate is provided. The fluorescent plate includes a fluorescent phase which emits fluorescence by excitation light, and a plurality of voids, wherein the plurality of voids include a plurality of particular voids having an equivalent circle diameter (or a circle equivalent diameter) of 0.4 micrometers or greater and 50 micrometers or smaller, and, in a cross section of the fluorescent plate, a ratio of the number of the particular voids having a circularity greater than 0.6 and 1 or less to the total number of the plurality of particular voids is 50% or greater. The plurality of voids include a plurality of particular voids having a circularity less than 0.4.
   According to the above configuration, the fluorescent plate includes a plurality of voids, and the light in the fluorescent plate is scattered at the surface of the fluorescent phase facing the voids, thereby leading to enhancement in light extraction efficiency. In addition, the plurality of voids include a plurality of particular voids having an equivalent circle diameter of 0.4 micrometers or greater and 50 micrometers or smaller. In a cross section of the fluorescent plate, 50% or more of the plurality of particular voids included in the cross section have a circularity greater than 0.6 and 1 or less. In other words, the fluorescent plate contains a large number of particular voids having a shape almost equivalent to a circle. Since such circle-like particular voids have no angular portions which are susceptible to the stress attributable to thermal shock, the fluorescent plate having a large number of particular voids of the above-mentioned shape becomes resistive to breakage due to thermal shock. As a result, the light extraction efficiency as well as thermal shock resistance can be enhanced.
(2) In the fluorescent plate of the above aspect, the ratio of the number of the particular voids having a circularity greater than 0.6 and 1 or less to the total number of the plurality of particular voids may be 70% or greater. According to this technical feature, in a cross section of the fluorescent plate, 70% or more of the plurality of particular voids included in the cross section have a circularity greater than 0.6 and 1 or less. Thus, the fluorescent plate becomes more resistive to breakage due to thermal shock, and the light extraction efficiency as well as thermal shock resistance can be further enhanced.
(3) In the fluorescent plate of the above aspect, the ratio of the number of the particular voids having a circularity less than 0.4 to the total number of the plurality of particular voids is 8% or less. According to this technical feature, in a cross section of the fluorescent plate, the ratio of the number of the particular voids having a circularity less than 0.4 to the total number of the plurality of particular voids included in the cross section is 8% or less. Thus, the number of voids having angular portions which are susceptible to the stress attributable to thermal shock is reduced, and the fluorescent plate becomes more resistive to breakage due to thermal shock. As a result, the light extraction efficiency as well as thermal shock resistance can be further enhanced.
(4) In the fluorescent plate of the above aspect, the ratio of the number of the particular voids having a circularity less than 0.4 to the total number of the plurality of particular voids may be 3% or less. According to this technical feature, in a cross section of the fluorescent plate, the ratio of the number of the particular voids having a circularity less than 0.4 to the total number of the plurality of particular voids included in the cross section is 3% or less. Thus, the number of voids having angular portions which are susceptible to the stress attributable to thermal shock is further reduced, and the fluorescent plate becomes more resistive to breakage due to thermal shock. As a result, the light extraction efficiency as well as thermal shock resistance can be further enhanced.
(5) The fluorescent plate of the above aspect may further include a light-transmitting phase which allows passage of the excitation light, and in a cross section of the fluorescent plate including cross sections of the voids, a ratio of the area of the fluorescent phase present in the fluorescent plate to the total area of the fluorescent phase and the light-transmitting phase present in the fluorescent plate may be 95% or lower. According to this technical feature, light is scattered in a suitable manner in the light-transmitting phase, and the optical path length in the fluorescent phase is comparatively prolonged, whereby a drop in percent light absorption can be suppressed. Thus, light extraction efficiency can be enhanced.
(6) In another aspect of the present invention, a wavelength conversion member is provided. The wavelength conversion member includes the fluorescent plate, and a reflection member which is attached to the fluorescent plate and which reflects the excitation light and the fluorescence. According to this configuration, the wavelength conversion member possesses a reflection member which reflects the fluorescence emitted from the fluorescent plate and the excitation light. Thus, in the fluorescent plate, light radiating to a direction different from the target direction of radiation is reflected by a reflection plate to the target direction. As a result, a large quantity of light can be radiated from the wavelength conversion member.
(7) The wavelength conversion member of the above aspect may further include a heat radiation member for radiating heat of the fluorescent plate to an outside atmosphere. According to this configuration, the wavelength conversion member possesses a heat radiation member for dissipating heat of the fluorescent plate to an outside atmosphere. Thus, in the fluorescent plate, heat generated at fluorescent emission induced by excitation light can be efficiently dissipated to an outside atmosphere, thereby suppressing quenching, which would otherwise be caused by a rise in temperature of the fluorescent plate. As a result, a drop in quantity of light radiated from the wavelength conversion member can be suppressed.
(8) In still another aspect of the present invention, a light source device is provided. The light source device may include the wavelength conversion member, and a light source which radiates the excitation light to the fluorescent plate. According to this configuration, the light source device possesses a light source which radiates excitation light to the fluorescent plate. When the light source emits excitation light to the fluorescent plate, fluorescence occurs in the fluorescent plate by the excitation light. The resultant fluorescence is reflected by the fluorescent phase whose predominant portions face toward the voids, whereby the quantity of light radiated to the outside the fluorescent plate (i.e., fluorescence) increases. As a result, the light source device can provide enhanced light emission intensity.

Notably, the present invention can be realized in various modes. For example, the present invention may be realized as a method producing a fluorescent plate, a method for producing a wavelength conversion member, a method for producing a light source device, a system including a light source device, a method for regulating a light source device, a computer program for causing a manufacturing apparatus to execute manufacture of a light source device, and other modes.

### [Brief Description of the Drawings]

[Fig. 1] Schematic view of a light source device having a fluorescent plate of a first embodiment.
[Fig. 2] Enlarged cross-sectional view of the fluorescent plate.
[Fig. 3] An exemplary SEM image of a sample obtained through image processing.
[Fig. 4] Table showing the results of an assessment test of samples.

### [Mode for Carrying out the Invention]

### <First embodiment>

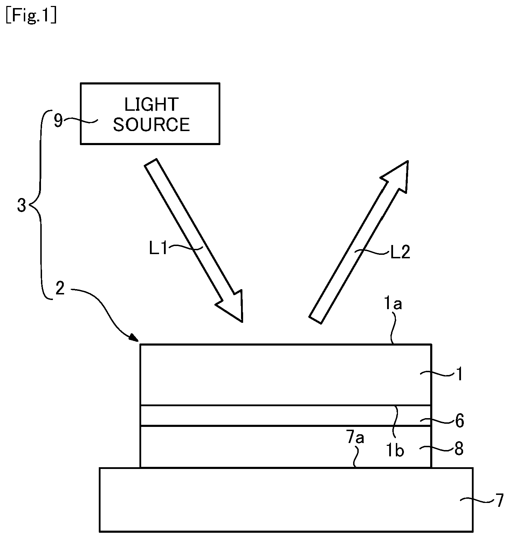

Fig. 1 is a schematic view of a light source device 3 having a fluorescent plate 1 of a first embodiment. When the fluorescent plate 1 of the present embodiment is irradiated with light L1 emitted by a light source 9 (e.g., a light emitting diode (LED) or a semiconductor laser (a laser diode (LD)) belonging to the light source device 3, the fluorescent plate 1 generates florescence having a wavelength different from that of light L1. The fluorescence generated by the fluorescent plate 1 intermingles with light which has not been involved in generation of fluorescence at the fluorescent plate 1, to thereby provide radiation (light L2) toward a specific direction. As shown in Fig. 1, the light source device 3 of the present embodiment is a reflection-type light source device and is used in various types of optical apparatuses such as headlights, lighting equipment, and projectors. The light source device 3 has the aforementioned light source 9 and a wavelength conversion member 2. The wavelength conversion member 2 includes the fluorescent plate 1, a reflection member 6, a heat radiation member 7, and a joint layer 8. For the purpose of illustration, the members are illustrated in Fig. 1 in such a manner that the dimensional relation differs from the actual relation.

The fluorescent plate 1 is a plate-shape member formed of a sintered ceramic material. The fluorescent plate 1 has an incident surface 1a into which the incident light L1 enters, and a backside surface 1b opposite to the incident surface 1a. The fluorescent plate 1 generates fluorescence by the excitation light L1 which enters through the incident surface 1a. During generation of fluorescence, the fluorescent plate 1 generates heat. Detailed description of the fluorescent plate 1 will next be provided.

The reflection member 6 is a thin film mainly formed of silver (Ag) and disposed on the backside surface 1b of the fluorescent plate 1. The reflection member 6 reflects, toward the direction of the incident surface 1a, the light component passing through fluorescent plate 1 and included in the light L1 emitted from the light source 9, and the fluorescence component going to the backside surface 1b and included in the fluorescence generated by the fluorescent plate 1. Notably, the reflection member 6 may be formed of a material having high reflectivity such as silver alloy or aluminum (Al).

The heat radiation member 7 is a plate-shape member formed of a material having a thermal conductivity higher than that of the fluorescent plate 1, such as copper, copper-molybdenum alloy, copper-tungsten alloy, aluminum, or aluminum nitride. The heat radiation member 7 can dissipate heat of the fluorescent plate 1 transferred through the joint layer 8 to an outside atmosphere. Notably, the heat radiation member 7 may be a single-layer member formed of any of the aforementioned materials, or a multi-layer member formed of materials which are identical to or different from one another. In addition, a metal film may be disposed on a fluorescent plate 1 side surface 7a of the heat radiation member 7 so as to enhance adhesion with the joint layer 8.

The joint layer 8 is disposed between the reflection member 6 and the heat radiation member 7 and is formed of gold (Au) and tin (Sn). The joint layer 8 can join the fluorescent plate 1 to the heat radiation member 7 and transfers the heat generated at the fluorescent plate 1 to the heat radiation member 7. Notably, the joint layer 8 may be formed of a material other than gold and tin, and may be formed of a solder of other metals, or a sintered material of a micropowder of, for example, silver or copper (Cu).

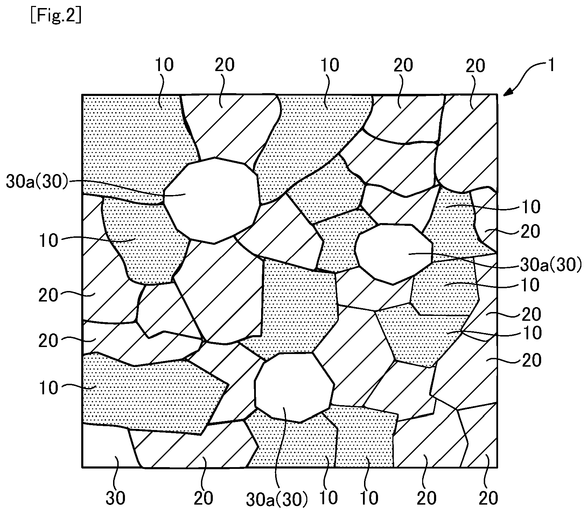

Fig. 2 is an enlarged cross-sectional view of the fluorescent plate 1. Next, characteristic features of the fluorescent plate 1 of the present embodiment will be described. As shown in Fig. 2, the fluorescent plate 1 has a fluorescent phase 10, a light-transmitting phase 20, and voids 30.

The fluorescent phase 10 is formed of a plurality of fluorescent crystalline particles. In the present embodiment, the fluorescent crystalline particles have a composition represented by a chemical formula A₃B₅O₁₂:Ce (i.e., a garnet-type crystal structure). The formula A₃B₅O₁₂:Ce denotes that Ce forms a solid solution with A₃B₅O₁₂, and element A is partially substituted by Ce. Each of element A and element B in the chemical formula A₃B₅O₁₂:Ce represents at least one element selected from the corresponding element group:
element A: Sc, Y, and lanthanoids (except for Ce) (however, element A may further include Gd); and
element B; Al (element B may further include Ga).

Notably, the composition and element type of the fluorescent crystalline particles forming the fluorescent phase 10 are not limited to the aforementioned composition and types of elements. One single fluorescent phase 10 may be formed of fluorescent crystalline particles of a plurality of types.

The light-transmitting phase 20 is formed of a plurality of light-emitting crystalline particles. The light-transmitting crystalline particles have a composition represented by a chemical formula Al₂O₃. The light-transmitting phase 20 disposed in the fluorescent plate 1 allows passage of light and also serves as a heat transfer route which can efficiently transfer heat generated upon generation of fluorescence at the fluorescent phase 10 to the heat radiation member 7. The refractive index of the light-transmitting phase 20 is lower than that of the fluorescent phase 10.

The voids 30 are provided such that they are surrounded by the fluorescent phase 10 and the light-transmitting phase 20. In the present embodiment, as shown in Fig. 2, the fluorescent plate 1 is provided with a plurality of the voids 30. The plurality of voids 30 include a plurality of particular voids 30a having an equivalent circle diameter of 0.4 micrometers or greater and 50 micrometers or smaller. As used herein, the term "equivalent circle diameter" refers to the diameter of a perfect circle having an area equivalent to that of the region of interest. In the present embodiment, the average equivalent circle diameter of the plurality of particular voids 30a is 1 micrometer or greater and smaller than 10 micrometers. The refractive index of the particular voids 30a is lower than that of the light-transmitting phase 20. That is, the refractive index of the particular voids 30a is lower than that of the fluorescent phase 10. Notably, the concept "particular void 30a" does not encompass a micro-void which is naturally provided at the boundary between the fluorescent phase 10 and the light-transmitting phase 20 and which cannot be observed through a customary method. Also, the concept does not encompass cracks and the like unintentionally generated in the below-mentioned process for producing the fluorescent plate 1.

In the present embodiment, the portion of the fluorescent plate 1 other than voids 30 is formed of the fluorescent phase 10 at a volume ratio of 60% and the light-transmitting phase 20 at a volume ratio of 40%. In other words, in a cross section of the fluorescent plate 1 as shown in Fig. 2, the ratio of the area of the fluorescent phase 10 present in the fluorescent plate 1 to the total area of the fluorescent phase 10 and the light-transmitting phase 20 present in the fluorescent plate 1 is 60%, and the ratio of the area of the light-transmitting phase 20 present in the fluorescent plate 1 to the same total area is 40%. The ratio of the area of the fluorescent phase 10 present in the fluorescent plate 1 to the total area of the fluorescent phase 10 and the light-transmitting phase 20 present in the fluorescent plate 1 is preferably 95% or less, in a cross section of the fluorescent plate 1 including cross sections of the voids 30 as shown in Fig. 2. According to the technical feature, light is scattered in a suitable manner in the light-transmitting phase 20, and the optical path length in the fluorescent phase 10 is comparatively prolonged, whereby a drop in percent light absorption can be suppressed. Also, in a cross section of the fluorescent plate 1, the ratio of the area of the fluorescent phase 10 present in the fluorescent plate 1 to the total area of the fluorescent phase 10 and the light-transmitting phase 20 present in the fluorescent plate 1 is preferably greater than 20%, more preferably greater than 30%. When the area ratio of the fluorescent phase 10 is 20% or less, emission from the fluorescent phase 10 is weakened. As a result, the achieved luminance is drastically impaired.

In the present embodiment, in a cross section of the fluorescent plate 1 as shown in Fig. 2, the ratio of the number of the particular voids 30a having a circularity greater than 0.6 and 1 or less to the total number of the plurality of particular voids 30a is 70% or greater. The ratio of the number of the particular voids 30a having a circularity Ci less than 0.4 is 3% or less. Next, the relationship between the circularity and the number of voids in the fluorescent plate 1 will be described. The circularity Ci of one particular void 30a is calculated by the following formula (1): $Ci = 4 \times π \times Sv / {Lp}^{2}$ (wherein 0<Ci≤1).

In the above formula, Sv represents the area (unit: m²) of a particular void 30a in a cross section of the fluorescent plate 1, and Lp represents the circumference (unit: m) of the particular void 30a in a cross section of the fluorescent plate 1. Accordingly, the fluorescent plate 1 of the present embodiment contains a large number of particular voids 30a having a shape almost equivalent to a circle.

Next, a method for producing the fluorescent plate 1 will be described. In the method for producing the fluorescent plate 1, firstly, each raw material was weighed so that the ratio of the fluorescent phase 10 to the light-transmitting phase 20 was adjusted to 6 : 4 in the fluorescent plate 1. The thus-prepared raw material mixture was added with ethanol to a ball mill, and the resultant mixture was kneaded and pulverized for 16 hours, to thereby prepare a slurry. The slurry was dried, and the dried product was granulated. Subsequently, the thus-granulated particles, a pore-forming material, and a binder were kneaded by means of a ball mill for 1 hour or longer, and the resultant mixture was further kneaded with water added thereto. The thus-prepared ceramic raw material is formed into a sheet by means of an extruder. Thus, since the mixture of component particles is kneaded before addition of water thereto, dispersion of the pore-forming material is facilitated, to thereby enhance the circularity of pores provided through sintering. Next, the thus-prepared sheetform compact is fired in air at 1,700 degrees Celsius for sintering, to thereby produce the fluorescent plate 1.

In the production of a wavelength conversion member 2 including the fluorescent plate 1, a reflection member 6 in the form of a film is formed on the backside 1b of the fluorescent plate 1 through vapor deposition or sputtering of silver. Subsequently, gold-tin solder foil is sandwiched between the heat radiation member 7 and the reflection member 6 as film formed on the fluorescent plate 1, and the stacked body is heated in a reflow furnace under nitrogen or hydrogen. As a result, the fluorescent plate 1 is joined to the heat radiation member 7, whereby the wavelength conversion member 2 is yielded. Notably, instead of use of gold-tin solder foil, joining of the fluorescent plate 1 to the heat radiation member 7 may be performed through application of a gold-tin solder paste.

Further, in the production of a light source device 3 including the wavelength conversion member 2, a light source 9 is set such that an incident surface 1a of the fluorescent plate 1 included in the wavelength conversion member 2 is irradiated with light, to thereby complete packaging of the wavelength conversion member 2 and the light source 9. Thus, the light source device 3 is fabricated.

Next, some tests for assessing the fluorescent plate 1 of the present embodiment and the results of the tests will be described. In the assessment, a plurality of fluorescent plate samples were prepared. Thermal shock resistance and luminance of each sample was measured, and the results of the tested samples were compared.

Firstly, there will be a method of preparing samples to be assessed. The samples employed in the assessment were prepared through a method almost equivalent to the aforementioned method for producing the fluorescent plate 1. In the sample production method, conditions for kneading a mixture of granulated particles with a pore-forming agent, a binder, and water were modified, to thereby regulate shear force. In the case where the kneading degree is elevated, voids provided in the sample tend to have a larger circularity. In the thus-prepared samples, a plurality of voids having different circularity are distributed. In the assessment tests, eight samples were prepared in total.

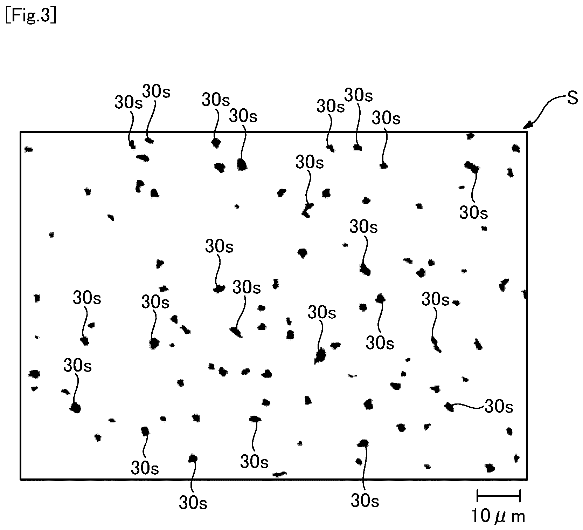

Fig. 3 is an exemplary SEM image of a sample obtained through image processing. In this assessment test, for each of the plurality of prepared samples, the circularity of voids having an equivalent circle diameter of 0.4 micrometers or greater and 50 micrometers or smaller was calculated through the following procedure. Specifically, each sample was cut, and the cut surface was mirror-polished. The thus-provided surface was observed under an FE-SEM. Then, a cross-sectional image was taken at five points selected at random. The images were binarized through image processing (WinROOF). Fig. 3 is an exemplary SEM image of a sample obtained through image processing, the SEM image being represented by S. In the SEM image, voids 30s correspond to black portions obtained through binarization. Next, the area ratio of voids in a cross section of each sample was calculated from the obtained image. In addition, cross-sectional images in which the void occupational ratio in a cross section of the sample was 2.5% or greater and 3.2% or less were selected from among the plurality of cross-sectional images employed in void area ratio calculation. The circularity of all voids present in each image and having an equivalent circle diameter of 1 micrometer or greater and 10 micrometers or smaller was calculated. In this case, the circularity was calculated from the results of analysis based in image processing by the following formula (2) (the same formula as the aforementioned formula (1)): $Ci = 4 \times π \times Sv / {Lp}^{2}$

In the above formula, in the case of the SEM image analysis image shown in Fig. 3, Sv represents the area of one void 30s, and Lp represents the circumference of one void 30s.

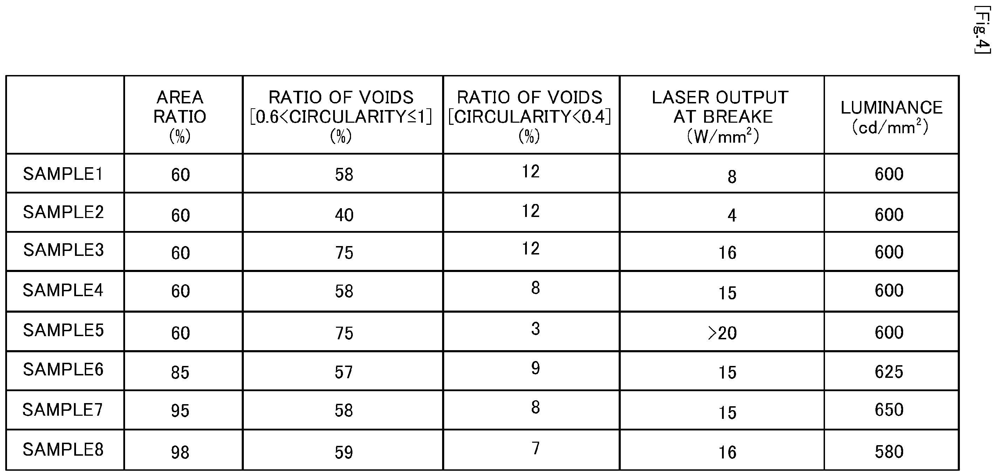

Fig. 4 is a table showing the results of an assessment test of samples. In this test, samples each having a thickness of 80 micrometers adjusted by mirror polishing were employed, and thermal shock resistance of each sample was evaluated through irradiation with blue laser light. In a specific procedure, the sample was irradiated with blue laser light, with increase in output of the laser light. The blue laser light output at which the sample was broken was employed as an index for assessing thermal shock resistance of the sample. Also, luminance was measured in this test. Specifically, samples each having a thickness of 200 micrometers and a mirror-polished surface were subjected to luminance measurement. Each sample was irradiated with laser light (wavelength: 450 nm, beam diameter: 0.4 mm, output: 5 W), and the intensity of the light toward the reflection direction was measured by means of a luminance meter, to thereby provide an index for assessment. Among eight samples listed in Fig. 4, samples 1 to 3 were prepared with modification of the ratio of voids having a circularity greater than 0.6 and 1 or less. Samples 4 and 5 were prepared with modification of the ratio of voids having a circularity less than 0.4. Samples 6 to 8 were the same as samples 1 to 5, except that the ratio of the area of the fluorescent phase 10 to the total area of the fluorescent phase 10 and the light-transmitting phase 20, determined in a cross section of the fluorescent plate 1, was modified.

In comparison among samples 1 to 3, as is clear from Fig. 4, the higher the ratio of voids having a circularity greater than 0.6 and 1 or less, the greater the laser output tolerance at which the tested sample was broken. That is, the higher the ratio of voids having a circularity greater than 0.6 and 1 or less, the higher the thermal shock resistance. As is clear from comparison of sample 1 with sample 4, the lower the ratio of voids having a circularity less than 0.4, the higher the thermal shock resistance, even when the ratio of voids having a circularity greater than 0.6 and 1 or less was constant. Among five samples, sample 5 had the highest ratio of voids having a circularity greater than 0.6 and 1 or less, as sample 3 has the same void ratio. Also, among five samples, sample 5 had the lowest ratio (i.e., 3%) of voids having a circularity less than 0.4. The thermal shock resistance of sample 5 was the highest among five samples. Actually, no breakage was observed upon irradiation with laser light having an output higher than 20 W/mm². Thus, correlation was found between circularity of voids and thermal shock resistance in the fluorescent plate.

As is clear from comparison of sample 1 with samples 6 to 8, the higher the ratio of the area of the fluorescent phase 10 to the total area of the fluorescent phase 10 and the light-transmitting phase 20, the greater the thermal shock resistance. In this case, enhancement in luminance was confirmed. In contrast, when the ratio of the area of the fluorescent phase 10 to the total area of the fluorescent phase 10 and the light-transmitting phase 20 was greater than 95% (in the case of sample 8), a slight drop in luminance was observed. Conceivably, the reason for the drop is that light scattering is impeded due to presence of the light-transmitting phase 20 in a small amount, thereby shortening the optical path length in the fluorescent phase 10.

Generally, high mechanical strength of a fluorescent plate formed of a sintered ceramic body is achieved by firing the raw material at high temperature so as to densify the inside of the fluorescent plate. However, when the approach of densifying the inside of the fluorescent plate is employed, light is diffused at the grain boundary between crystal grains in the fluorescent plate, thereby causing broadening of light emission. In such a case, satisfactory light concentration efficiency cannot be attained, which is problematic. One possible means for solving the problem is to provide a portion which has a relatively big difference in refractive index with respect to the light-transmitting phase and the fluorescent phase, the portion being originating from the voids remaining in the fluorescent plate and having a refractive index lower than that of the light-transmitting phase or the fluorescent phase, whereby diffusion of light is prevented to thereby promote scattering of light. However, when the approach of providing voids is employed, difficulty is encountered in regulating the shape of voids. Since the shape varies depending on the form of the pore-forming agent, voids having a rhombic or elongated shape tend to be provided. Also, when a large number of voids are provided, the fluorescent plate itself becomes fragile, whereby thermal shock resistance may readily decrease. In addition, since excitation light is converted to heat at crystal defects present in the fluorescent plate, thermal shock stress is concentrated to corners of angular-shape voids, thereby promoting breakage of the fluorescent plate. Thus, the thermal shock resistance of the fluorescent plate may be impaired.

According to the fluorescent plate 1 of the aforementioned present embodiment, the fluorescent plate 1 includes a plurality of voids 30. The light in the fluorescent plate 1 is scattered at the surface of the fluorescent phase 10 or the light-transmitting phase 20 facing the voids 30, thereby leading to enhancement in light extraction efficiency. The plurality of voids 30 include a plurality of particular voids 30a having an equivalent circle diameter of 0.4 micrometers or greater and 50 micrometers or smaller. In a cross section of the fluorescent plate 1, among the plurality of particular voids 30a included in the cross section, 70% or more of the particular voids 30a have a circularity greater than 0.6 and 1 or less. In other words, the fluorescent plate 1 contains a large number of particular voids 30a having a shape almost equivalent to a circle. Since such circle-like particular voids 30a have no angular portions which are susceptible to the stress attributable to thermal shock, the fluorescent plate 1 having a large number of particular voids 30a of the above-mentioned shape becomes resistive to breakage due to thermal shock. As a result, the light extraction efficiency as well as thermal shock resistance can be enhanced.

According to the fluorescent plate 1 of the present embodiment, in a cross section of the fluorescent plate 1, the ratio of the number of the particular voids 30a having a circularity less than 0.4 to the total number of the plurality of particular voids 30a included in the cross section is 3% or less. Thus, the number of voids having angular portions which are susceptible to the stress attributable to thermal shock is small, and the fluorescent plate 1 becomes more resistive to breakage due to thermal shock. As a result, the light extraction efficiency as well as thermal shock resistance can be further enhanced.

According to the fluorescent plate 1 of the present embodiment, in a cross section of the fluorescent plate 1 including cross sections of the voids 30, the ratio of the area of the fluorescent phase 10 present in the fluorescent plate 1 to the total area of the fluorescent phase 10 and the light-transmitting phase 20 present in the fluorescent plate 1 is 60% (i.e., 95% or less), and the ratio of the area of the light-transmitting phase 20 present in the fluorescent plate 1 to the same total area is 40%. According to the technical feature, light is scattered in a suitable manner in the light-transmitting phase 20, and the optical path length in the fluorescent phase 10 is comparatively prolonged, whereby a drop in percent light absorption can be suppressed. Thus, light extraction efficiency can be further enhanced.

According to the wavelength conversion member 2 of the present embodiment, the wavelength conversion member 2 includes a reflection member 6 which reflects the fluorescence emitted from the fluorescent plate 1 and the excitation light. According to this configuration, as shown in, for example, Fig. 1, in the fluorescent plate 1, light radiating to a direction different from the direction of light L2 is reflected by the reflection member 6 toward the target direction. As a result, a large quantity of light can be radiated from the wavelength conversion member 2.

According to the wavelength conversion member 2 of the present embodiment, the wavelength conversion member 2 possesses a heat radiation member 7 for dissipating heat of the fluorescent plate 1 to an outside atmosphere. Thus, in the fluorescent plate 1, heat generated at fluorescent emission induced by excitation light can be efficiently dissipated to an outside atmosphere, thereby suppressing quenching, which would otherwise be caused by a rise in temperature of the fluorescent plate 1. As a result, a drop in quantity of light radiated from the wavelength conversion member 2 can be suppressed.

According to the light source device 3 of the present embodiment, the light source device 3 has a light source 9 which radiates light L1 to the fluorescent plate 1. When the light source 9 emits light L1 to the fluorescent plate 1, fluorescence is generated in the fluorescent plate 1 by a certain light component of light L1. The fluorescence emitted by fluorescent plate 1 is reflected by the surface of the fluorescent phase 10, predominant portions of the surface facing toward the voids 30, whereby the quantity of light radiated to the outside the fluorescent plate 1 increases. As a result, the light source device 3 can provide enhanced light emission intensity.

### <Modifications of the present embodiment>

The present invention is not limited to the above-described embodiment and can be practiced in various forms without departing from the scope of the invention as defined in the appended claims, and, for example, the following modifications are possible.

### [Modification 1]

In the aforementioned embodiment, the ratio of the number of the particular voids 30a having a circularity greater than 0.6 and 1 or less to the total number of the plurality of particular voids 30a included in the fluorescent plate 1 was adjusted to 70% or greater. However, according to the invention the ratic is at least 50% or greater. When the ratio is 50% or greater, voids have no angular portions which are susceptible to the stress attributable to thermal shock. The fluorescent plate 1 having a large number of particular voids 30a of such a shape becomes resistive to thermal shock.

### [Modification 2]

In the aforementioned embodiment, the ratio of the number of the particular voids 30a having a circularity less than 0.4 to the total number of the plurality of particular voids 30a included in the fluorescent plate 1 was adjusted to 3% or less. However, according to the invention the ratio is 8% or less. As the number of particular voids 30a having a circularity less than 0.4 is reduced, the number of angular portions which are susceptible to the stress attributable to thermal shock is further reduced. As a result, thermal shock resistance can be enhanced.

### [Modification 3]

In the aforementioned embodiment, the plurality of voids 30 of the fluorescent plate 1 included a plurality of particular voids 30a having an equivalent circle diameter of 0.4 micrometers or greater and 50 micrometers or smaller. Among the plurality of particular voids 30a, 70% or more of the particular voids 30a had a circularity greater than 0.6 and 1 or less. Among the plurality of voids 30, when 90% or more of the voids 30 having an equivalent circle diameter of 0.8 micrometers or greater and 10 micrometers or smaller have a circularity of greater than 0.6 and 1 or less, thermal shock resistance can be further enhanced.

### [Modification 4]

In the aforementioned embodiment, in a cross section of the fluorescent plate 1, the ratio of the area of the fluorescent phase 10 present in the fluorescent plate 1 to the total area of the fluorescent phase 10 and the light-transmitting phase 20 present in the fluorescent plate 1 was 60%, and the ratio of the area of the light-transmitting phase 20 present in the fluorescent plate 1 to the same total area was 40%. However, the area ratio of the fluorescent phase in a cross section of the fluorescent plate is not limited to the above value. The area ratio of the fluorescent phase 10 is preferably 95% or less, from the viewpoint of prolonging the optical path length in the florescent phase 10 by suitable light scattering. Also, the area ratio of the fluorescent phase 10 is preferably greater than 20%, in order to ensure a satisfactory level of intensity of the fluorescence emitted by the fluorescent phase 10. When the area ratio is greater than 30%, high luminance can be consistently achieved.

### [Modification 5]

According to the aforementioned embodiment, the light source device 3 is a reflection-type light source device. However, the fluorescent plate 1 may be applied to a transmission-type light source device.

Although the present aspects have been described on the basis of embodiments and modifications, the above-described embodiments of the aspects is provided so as to facilitate the understanding of the present aspects and does not limit the present aspect. The present aspects can be changed or improved without departing from the scope of the invention as defined in the claims.

### [Description of Symbols]

1: fluorescent plate
1a: incident surface
1b: backside surface
2: wavelength conversion member
3: light source device
6: reflection member
7: heat radiation member
9: light source
10: fluorescent phase
20: light-transmitting phase
30: voids
30a: particular voids

## Claims

1. A fluorescent plate(1) comprising
a fluorescent phase(10) which emits fluorescence by excitation light, and
a plurality of voids(30), wherein
the plurality of voids(30) include a plurality of particular voids(30a) having an equivalent circle diameter of 0.4 micrometers or greater and 50 micrometers or smaller,
**characterised in that**
in a cross section of the fluorescent plate(1), a ratio of the number of the particular voids(30a) having a circularity greater than 0.6 and 1 or less to the total number of the plurality of particular voids(30a) is 50% or greater, wherein
the plurality of voids(30) include a plurality of particular voids(30a) having a circularity less than 0.4, and
the ratio of the number of the particular voids(30a) having a circularity less than 0.4 to the total number of the plurality of particular voids(30a) is 8% or less.

2. The fluorescent plate(1) according to claim 1, wherein
the ratio of the number of the particular voids(30a) having a circularity greater than 0.6 and 1 or less to the total number of the plurality of particular voids(30a) 70% or greater.

3. The fluorescent plate(1) according to claim 1 or 2, wherein
the ratio of the number of the particular voids(30a) having a circularity less than 0.4 to the total number of the plurality of particular voids(30a) is 3% or less.

4. The fluorescent plate(1) according to any one of claims 1 to 3,
which further includes a light-transmitting phase(20) which allows passage of the excitation light, and
in a cross section of the fluorescent plate(1) including cross sections of the voids(30), a ratio of the area of the fluorescent phase(10) present in the fluorescent plate(1) to the total area of the fluorescent phase(10) and the light-transmitting phase(20) present in the fluorescent plate(1) is 95% or lower.

5. A wavelength conversion member(2) **characterized by** comprising
a fluorescent plate(1) as recited in any one of claims 1 to 4, and
a reflection member(6) which is attached to the fluorescent plate(1) and which reflects the excitation light and the fluorescence.

6. The wavelength conversion member(2) according to claim 5,
which further includes a heat radiation member(7) for radiating heat of the fluorescent plate(1) to an outside atmosphere.

7. A light source device(3) **characterized by** comprising
a wavelength conversion member(2) as recited in claim 5 or 6, and
a light source(9) which radiates the excitation light to the fluorescent plate(1).

## Patentansprüche

1. Fluoreszenzplatte (1), die umfasst
eine Fluoreszenzphase (10), die durch Anregungslicht Fluoreszenz emittiert, und
eine Vielzahl von Hohlräumen (30), wobei
die Vielzahl von Hohlräumen (30) eine Vielzahl von bestimmten Hohlräumen (30a) mit einem äquivalenten Kreisdurchmesser von 0,4 Mikrometer oder mehr und 50 Mikrometer oder weniger enthält,
**dadurch gekennzeichnet, dass**
in einem Querschnitt der Fluoreszenzplatte (1) das Verhältnis der Anzahl der bestimmten Hohlräume (30a) mit einer Rundheit von mehr als 0,6 und 1 oder weniger zur Gesamtanzahl der Vielzahl der bestimmten Hohlräume (30a) 50 % oder mehr beträgt, wobei
die Vielzahl von Hohlräumen (30) eine Vielzahl bestimmter Hohlräume (30a) mit einer Rundheit von weniger als 0,4, enthält und
das Verhältnis der Anzahl der bestimmten Hohlräume (30a) mit einer Rundheit von weniger als 0,4 zur Gesamtzahl der Vielzahl bestimmter Hohlräume (30a) 8 % oder weniger beträgt.

2. Fluoreszenzplatte (1) nach Anspruch 1, wobei
das Verhältnis der Anzahl der bestimmten Hohlräume (30a) mit einer Rundheit von mehr als 0,6 und 1 oder weniger zur Gesamtzahl der Vielzahl bestimmter Hohlräume (30a) 70 % oder mehr beträgt.

3. Fluoreszenzplatte (1) nach Anspruch 1 oder 2, wobei
das Verhältnis der Anzahl der bestimmten Hohlräume (30a) mit einer Rundheit von weniger als 0,4 zur Gesamtzahl der Vielzahl bestimmter Hohlräume (30a) 3 % oder weniger beträgt.

4. Fluoreszenzplatte (1) nach Anspruch 1 bis 3,
die ferner eine lichtdurchlässige Phase (20) enthält, die den Durchgang des Anregungslichts ermöglicht, und
wobei in einem Querschnitt der Fluoreszenzplatte (1), der Querschnitte der Hohlräume (30) enthält, das Verhältnis der Fläche der in der Fluoreszenzplatte (1) vorhandenen Fluoreszenzphase (10) zur Gesamtfläche der in der Fluoreszenzplatte (1) vorhandenen Fluoreszenzphase (10) und der lichtdurchlässigen Phase (20) 95 % oder weniger beträgt.

5. Wellenlängenkonverter (2), **dadurch gekennzeichnet, dass** er umfasst
eine Fluoreszenzplatte (1) nach einem der Ansprüche 1 bis 4, und
ein Reflektionselement (6), das an der Fluoreszenzplatte (1) angebracht ist und das das Anregungslicht und die Fluoreszenz reflektiert.

6. Wellenlängenkonverter (2) nach Anspruch 5,
der ferner ein Wärmeabstrahlelement (7) enthält, um Wärme der Fluoreszenzplatte (1) an die Außenatmosphäre abzustrahlen.

7. Lichtquellenvorrichtung (3), **gekennzeichnet durch**
einen Wellenlängenkonverter (2) gemäß Anspruch 5 oder 6 und
eine Lichtquelle (9), die das Anregungslicht auf die Fluoreszenzplatte (1) strahlt.

## Revendications

1. Plaque fluorescente (1) comprenant
une phase fluorescente (10) qui émet une fluorescence sous l'effet d'une lumière d'excitation, et
une pluralité de vides (30) ;
ladite pluralité de vides (30) comprenant une pluralité de vides particuliers (30a) présentant un diamètre circulaire équivalent supérieur ou égal à 0,4 micromètre et inférieur ou égal à 50 micromètres ;
**caractérisée en ce que**
dans une section transversale de la plaque fluorescente (1), le rapport entre le nombre de vides particuliers (30a) présentant une circularité supérieure à 0,6 et inférieure ou égale à 1, et le nombre total de la pluralité de vides particuliers (30a) est supérieur ou égal à 50 %,
ladite pluralité de vides (30) comprenant une pluralité de vides particuliers (30a) présentant une circularité inférieure à 0,4, et
le rapport entre le nombre des vides particuliers (30a) présentant une circularité inférieure à 0,4 et le nombre total de la pluralité de vides particuliers (30a) étant inférieur ou égal à 8 %.

2. Plaque fluorescente (1) selon la revendication 1, dans laquelle
le rapport entre le nombre de vides particuliers (30a) présentant une circularité supérieure à 0,6 et inférieure ou égale à 1 et le nombre total de la pluralité de vides particuliers (30a) est supérieur ou égal à 70 %.

3. Plaque fluorescente (1) selon la revendication 1 ou 2, dans laquelle
le rapport entre le nombre de vides particuliers (30a) présentant une circularité inférieure à 0,4 et le nombre total de la pluralité de vides particuliers (30a) est inférieur ou égal à 3 %.

4. Plaque fluorescente (1) selon l'une quelconque des revendications 1 à 3,
comprenant en outre une phase de transmission de lumière (20) permettant le passage de la lumière d'excitation, et
dans laquelle, dans une section transversale de la plaque fluorescente (1) comprenant des sections transversales des vides (30), le rapport entre la surface de la phase fluorescente (10) présente dans la plaque fluorescente (1) et la surface totale de la phase fluorescente (10) et de la phase de transmission de lumière (20) présentes dans la plaque fluorescente (1) est inférieur ou égal à 95 %.

5. Élément de conversion de longueur d'onde (2) **caractérisé en ce qu'**il comprend
une plaque fluorescente (1) selon l'une quelconque des revendications 1 à 4, et
un élément de réflexion (6) qui est fixé à la plaque fluorescente (1) et qui réfléchit la lumière d'excitation et la fluorescence.

6. Élément de conversion de longueur d'onde (2) selon la revendication 5,
comprenant en outre un élément de dissipation thermique (7) pour dissiper la chaleur de la plaque fluorescente (1) vers l'atmosphère extérieure.

7. Dispositif à source de lumière (3) **caractérisé en ce qu'**il comprend un élément de conversion de longueur d'onde (2) selon la revendication 5 ou 6, et une source de lumière (9) qui rayonne la lumière d'excitation vers la plaque fluorescente (1).
